(19) Europäisches Patentamt
European Patent Office
Office européen des brevets

(11) EP 4 495 165 A1

(12) EUROPEAN PATENT APPLICATION
published in accordance with Art. 153(4) EPC

(43) Date of publication:
**22.01.2025 Bulletin 2025/04**

(21) Application number: **23770764.1**

(22) Date of filing: **14.03.2023**

(51) International Patent Classification (IPC):
***C08G 65/30*** *(2006.01)*

(52) Cooperative Patent Classification (CPC):
**C08G 65/30;** Y02P 20/55

(86) International application number:
**PCT/JP2023/009771**

(87) International publication number:
**WO 2023/176809 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.03.2022 JP 2022042041**

(71) Applicant: **NOF Corporation**
**Shibuya-ku**
**Tokyo 150-6019 (JP)**

(72) Inventors:
- **TAKAHASHI, Yuichi**
  **Kawasaki-shi, Kanagawa 210-0865 (JP)**
- **YOSHIOKA, Hiroki**
  **Kawasaki-shi, Kanagawa 210-0865 (JP)**
- **SATO, Atsushi**
  **Kawasaki-shi, Kanagawa 210-0865 (JP)**
- **HIRAI, Midori**
  **Kawasaki-shi, Kanagawa 210-0865 (JP)**

(74) Representative: **Hoffmann Eitle**
**Patent- und Rechtsanwälte PartmbB**
**Arabellastraße 30**
**81925 München (DE)**

# (54) METHOD FOR PRODUCING POLYETHYLENE GLYCOL DERIVATIVE

(57) A crude polyethylene glycol derivative containing a polyethylene glycol derivative having at least one selected from the group consisting of a functional group capable of reacting with a bio-related substance, a functional group serving as a precursor of the functional group, and a protective group for the functional group at a terminal thereof, and impurities is mixed with a mixed organic solvent made from an organic solvent A and an organic solvent B to form a slurry, and the slurry is subjected to repulping washing, and then the polyethylene glycol derivative is recovered from the mixed organic solvent, and the polyethylene glycol derivative is dissolved in a good solvent and then the polyethylene glycol derivative is recovered. Assuming that (a mass of the organic solvent A/(the mass of the organic solvent A + a mass of the organic solvent B)) is Y, and a temperature during the repulping washing is T (°C), Y and T satisfy the following relation: $0.5 \leq Y \times T \leq 30$.

EP 4 495 165 A1

## Description

### TECHNICAL FIELD

The present invention relates to a method for producing a purified polyethylene glycol derivative.

### BACKGROUND ART

When a pharmaceutical that uses bio-related substances such as hormones, cytokines, and enzymes is administered into a general living body, it is promptly excreted from the living body through glomerular filtration in the kidneys and uptake by macrophages in the liver or spleen. Therefore, a half-life in blood of the pharmaceutical is short, and a sufficient pharmacological effect may not be obtained. To solve this problem, pharmaceuticals have been developed in which bio-related substances are chemically modified with water-soluble polymers such as polyethylene glycol or albumin. It is possible to extend the half-life in blood of the chemically modified bio-related substances by increasing a molecular weight thereof and forming a hydrated layer.

Polyethylene glycol is the most commonly used modifying agent used for performance improvement of the bio-related substances, and currently, several polyethylene glycol-modified pharmaceuticals are on the market and are used in medical settings around the world.

From the viewpoint of pharmaceutical performance and safety, polyethylene glycol derivatives used as such pharmaceutical raw materials or pharmaceutical additives are required to have few impurities and high uniformity. The impurities contained in the polyethylene glycol derivatives can be classified into high molecular weight compounds and low molecular weight compounds, and between the two kinds of impurities, the low molecular weight compound impurities are derived from low molecular weight compounds used when derivatizing polyethylene glycol terminals. The impurities derived from low molecular weight compounds often have reactive functional groups, which can cause unexpected side reactions when chemically modifying the bio-related substances, resulting in production of impurities in pharmaceuticals, and therefore, it is desirable to have a low impurity content. Since the quality of pharmaceutical is required to be uniform within each production lot, the polyethylene glycol derivatives used as pharmaceutical raw materials or pharmaceutical additives are also required to have a uniform impurity content within each production lot.

In general, when removing low molecular weight compounds as impurities from amphiphilic high molecular weight compounds such as polyethylene glycol, purification methods such as dialysis, ultrafiltration, ion exchange chromatography, extraction, and reprecipitation that utilize differences in molecular weight and physicochemical properties as shown in Non-patent Literature 1 can be used.

First, dialysis and ultrafiltration are known as methods for separation that utilize a difference in molecular weight, and techniques such as ion exchange chromatography are known as methods for separation that utilize a difference in electrostatic interactions. In order to utilize these purification methods, the low molecular weight compounds to be separated must be water-soluble. Therefore, when the low molecular weight impurities are hydrophobic compounds, it is difficult to purify the low molecular weight impurities efficiently using these methods.

Next, extraction is exemplified as a method for separation that utilizes a difference in solubility in water and organic solvents. In extraction, a necessary condition is that the solubility of a target substance and the impurities in water or organic solvents is significantly different. The amphiphilic polyethylene glycol has an extremely unique property that polyethylene glycol can be selectively distributed into either an organic layer or an aqueous layer during extraction in a two-phase system by using appropriate conditions. Therefore, when the impurities are water-soluble compounds, purification is possible by distributing the polyethylene glycol into the organic layer and the impurities into the aqueous layer. When the impurities are hydrophobic compounds, purification is possible by distributing the polyethylene glycol into the aqueous layer and the impurities into the organic layer. However, depending on the polyethylene glycol derivatives, reactive functional groups for modifying the pharmaceutical may be hydrolyzed, resulting in a decrease in quality, and therefore applicable polyethylene glycol derivatives are limited.

Like extraction, reprecipitation is a method for separation that utilizes the difference in solubility between the target substance and the impurities in a solvent, and is a method of removing the impurities by reducing the solubility of only the target substance in the solution, causing the target substance to precipitate, and then separating the precipitate from the solution containing the impurities. There are several techniques for reprecipitation, such as a method of cooling the solution to reduce the solubility of the target substance, and a method of adding a poor solvent to reduce the solubility of the target substance, and in general, by repeating the reprecipitation a plurality of times, it is possible to obtain a high-purity polyethylene glycol derivative with low impurity content, which is required for pharmaceutical raw materials or pharmaceutical additives. This is because polyethylene glycol has a property that polymer chains thereof entangle with each other and incorporate with impurities and the solvent to precipitate, and it is difficult to completely separate the precipitate from the solution containing the impurities, and therefore, it is necessary to gradually reduce the impurity concentration in the system by repeating the reprecipitation a plurality of times. Patent Literature 1 describes reprecipitation performed by

adding hexane, which is a poor solvent, to a polyethylene glycol derivative dissolved in heated ethyl acetate.

Repulping washing is also known as a method for separation that utilizes the difference in solubility between a high molecular weight compound and the impurities in a solvent. The repulping washing is a washing process using a solvent that dissolves only the impurities but not the target substance, and the impurities can be removed by separating the solution containing the target substance and the impurities after this repulping washing.

PRIOR ART DOCUMENTS

NON-PATENT LITERATURE

Non-patent Literature 1: Harris, J. M. Poly(Ethylene Glycol) Chemistry; Plenum Press: New York, 1992
Non-patent Literature 2: Green's Protective Groups in Organic Synthesis Fifth edition, Peter G.M. Wuts
Non-patent Literature 3: Gross, Hans; Bilk, L. Tetrahedron (1968), 24(24), 6935-9

PATENT LITERATURE

Patent Literature 1: JP2004-197077A

SUMMARY OF INVENTION

OBJECT TO BE ACHIEVED BY THE INVENTION

Since organic solvents are used as both a good solvent and a poor solvent in reprecipitation, the risk of hydrolysis is low even for polyethylene glycol derivatives having reactive functional groups sensitive to water, and hydrophobic compounds can be removed. By repeating the reprecipitation a plurality of times, it is possible to obtain a polyethylene glycol derivative of high purity and quality with a low impurity content, which is required for pharmaceutical raw materials or pharmaceutical additives, and therefore the reprecipitation is useful as a method for removing impurities from and purifying a polyethylene glycol derivative.

However, repeated purification of the polyethylene glycol derivative by reprecipitation may result in a decrease in quality. This is because heating is required when dissolving a precipitate of the polyethylene glycol derivative in the good solvent, and the repeated heating and dissolving step increases the heat history, which leads to an increase in polydispersity due to oxidative decomposition of polyethylene glycol chains. An increase in the times of reprecipitation also leads to an increase in the number of production steps, that is, an extension of production time, and as a result, production efficiency decreases.

Accordingly, although polyethylene glycol derivatives are important materials for medical applications, the polyethylene glycol derivatives have not yet been obtained by an easy industrial production method.

An object of the present invention is to provide an industrially practicable method for purifying polyethylene glycol, which can provide a polyethylene glycol derivative with high efficiency, high purity and uniform quality, and can prevent an increase in polydispersity due to an increase in heat history.

MEANS FOR ACHIEVING THE OBJECT

That is, the present invention is as follows.

(1) A method for producing a polyethylene glycol derivative, the method including:

(A) a step of preparing a crude polyethylene glycol derivative containing a polyethylene glycol derivative having at least one selected from the group consisting of a functional group capable of reacting with a bio-related substance, a functional group serving as a precursor of the functional group, and a protective group for the functional group at a terminal thereof, and impurities;
(B) a step of mixing the crude polyethylene glycol derivative with a mixed organic solvent made from an organic solvent A and an organic solvent B to form a slurry, repulping washing the slurry, and then recovering the polyethylene glycol derivative from the mixed organic solvent; and
(C) a step of dissolving the polyethylene glycol derivative obtained in the step (B) in a good solvent and then recovering the polyethylene glycol derivative from the good solvent, in which

the organic solvent A is selected from the group consisting of xylene, toluene, benzene, methyl acetate, ethyl acetate, butyl acetate, acetonitrile, acetone, N,N-dimethylformamide (DMF), dimethyl sulfoxide (DMSO), chloroform, dichloromethane, and combinations thereof,
the organic solvent B is selected from the group consisting of pentane, hexane, heptane, diethyl ether, methyl tert-butyl ether (MTBE), and combinations thereof, and
assuming that a mass ratio of the organic solvent A to a total value of a mass of the organic solvent A and a mass of the organic solvent B (mass of organic solvent A/(mass of organic solvent A + mass of organic solvent B)) is Y, and a temperature during the repulping washing is T (°C), Y and T satisfy the following relation.
$0.5 \leq Y \times T \leq 30$

(2) The method according to (1), in which the step (B) is repeated a plurality of times.
(3) The method according to (1) or (2), in which the organic solvent A is ethyl acetate or a mixed solvent of ethyl acetate and acetonitrile, and the organic solvent B is hexane.
(4) The method according to any one of (1) to (3), in which the mass of the organic solvent A and the mass of the organic solvent B are each 1 to 50 times a mass of the polyethylene glycol derivative, and the temperature during the repulping washing is 1°C to 33°C.

EFFECTS OF INVENTION

Repulping washing is an operation in which the polyethylene glycol derivative is washed with an organic solvent while still in a slurry state, and since purification without heating and dissolving the polyethylene glycol derivative is possible, it is expected that the heat history will be reduced and an increase in polydispersity will be prevented. However, there have been no reports on a type of the solvent and a temperature suitable for the repulping washing for the polyethylene glycol derivative.
For this reason, inventors of the present invention specifically studied repulping washing of polyethylene glycol derivatives containing impurities and found that by performing repulping washing using two or more kinds of organic solvents mixed in a specific weight ratio, it is possible to efficiently remove the impurities while preventing quality deterioration due to increased heat history, and to significantly reduce production time.
Furthermore, it was revealed that while repulping washing can efficiently remove the impurities, it is insufficient in terms of a uniformizing ability required for pharmaceutical raw materials, and it was found that by performing reprecipitation (a step of dissolving the polyethylene glycol derivative in a good solvent and then recovering the polyethylene glycol derivative) after the repulping washing, it is possible to obtain a target substance with uniform quality.
The purification method of the present invention can be achieved by controlling the weight ratio of the two or more kinds of organic solvents used in the repulping washing and the temperature during the repulping washing within appropriate ranges. Unlike other purification methods, there is no need for carriers/adsorbents such as resins or gels for purification, or ultrafiltration membranes, and therefore the purification method of the present invention can be performed on an industrially large scale.
Accordingly, the present invention is a novel purification method for obtaining a polyethylene glycol derivative, which is a pharmaceutical raw material or a pharmaceutical additive, with high efficiency, high purity, and uniform quality. The present purification method makes use of unique solubility of the polyethylene glycol derivative, making it possible to efficiently separate and remove the impurities, and furthermore, to obtain a polyethylene glycol derivative having high purity and uniform quality required for a pharmaceutical raw material or a pharmaceutical additive. The present purification method can be easily performed industrially, has excellent productivity, and can be performed in high yields by steps that do not generate waste materials such as adsorbents or ion exchange resins.

EMBODIMENTS FOR CARRYING OUT THE INVENTION

A number average molecular weight of a polyethylene glycol derivative of the present invention is a value obtained by analysis by gel permeation chromatography (GPC), and is a number average molecular weight calculated based on a calibration curve prepared using polyethylene glycols of various known molecular weights. The number average molecular weight of the polyethylene glycol derivative is not particularly limited, and is preferably 2,000 to 160,000, more preferably 2,000 to 120,000, and still more preferably 2,000 to 80,000. Note that the polyethylene glycol derivative having a number average molecular weight of less than 2,000 may be liquid at room temperature, and in this case, it is difficult to form a slurry using a mixed organic solvent, which makes the present invention difficult to apply.
The polyethylene glycol derivative of the present invention has one or more of a functional group capable of reacting with a bio-related substance, a functional group serving as a precursor of the functional group, or a protective group, at a terminal thereof.
The functional group capable of reacting with a bio-related substance is not particularly limited as long as it is a

functional group capable of chemically bonding to a functional group such as an amino group, a mercapto group, an aldehyde group, a carboxyl group, an unsaturated bond, or an azido group of the bio-related substance. Specifically, examples thereof include an active ester group, an active carbonate group, an aldehyde group, an isocyanate group, an isothiocyanate group, an epoxide group, a carboxyl group, a mercapto group, a maleimide group, a substituted maleimide group, a hydrazide group, a dithiopyridyl group, a substituted sulfonate group, a vinylsulfonyl group, an amino group, an oxyamino group ($H_2N$-O- group), an iodoacetamide group, an alkylcarbonyl group, an alkenyl group (for example, an allyl group, a vinyl group), an alkynyl group, a substituted alkynyl group (for example, an alkynyl group substituted with a hydrocarbon group having 1 to 5 carbon atoms as described below), an azido group, an acrylic group, a sulfonyloxy group (for example, an alkylsulfonyloxy group), and an $\alpha$-haloacetyl group, and preferred examples thereof include an active ester group, an active carbonate group, an aldehyde group, an isocyanate group, an isothiocyanate group, an epoxide group, a maleimide group, a substituted maleimide group, a vinylsulfonyl group, an acrylic group, a sulfonyloxy group (for example, an alkyl-sulfonyloxy group having 1 to 5 carbon atoms), a substituted sulfonate group, a carboxyl group, a mercapto group, a pyridyldithio group, an $\alpha$-haloacetyl group, an alkynyl group, a substituted alkynyl group (for example, an alkynyl group having 2 to 5 carbon atoms substituted with a hydrocarbon group having 1 to 5 carbon atoms as described below), an allyl group, a vinyl group, an amino group, an oxyamino group, a hydrazide group, and an azido group, and more preferred examples include an active ester group, an active carbonate group, an aldehyde group, a maleimide group, a carboxyl group, a mercapto group, an oxyamino group, and an amino group, and particularly preferred examples thereof include an active ester group, an active carbonate group, a maleimide group, a carboxyl group, a mercapto group, and an oxyamino group.

Specifically, the functional groups capable of reacting with a bio-related substance can be classified into the following groups (I), (II), (III), (IV), (V) and (VI).

Group (I): functional groups capable of reacting with an amino group of the bio-related substance

Examples thereof include those represented by the following (a), (b), (c), (d), (e), (f), (g), (j), and (k).
Group (II): functional groups capable of reacting with a mercapto group of the bio-related substance
Examples thereof include those represented by the following (a), (b), (c), (d), (e), (f), (g), (h), (i), (j), (k), and (l).
Group (III)): functional groups capable of reacting with an aldehyde group of the bio-related substance
Examples thereof include those represented by the following (h), (m), (n) and (p).
Group (IV): functional groups capable of reacting with a carboxyl group of the bio-related substance
Examples thereof include those represented by the following (h), (m), (n) and (p).
Group (V): functional groups capable of reacting with an unsaturated bond of the bio-related substance
Examples thereof include those represented by the following (h), (m), and (o).
Group (VI): functional groups capable of reacting with an azido group of the bio-related substance
Examples thereof include one represented by the following (l).

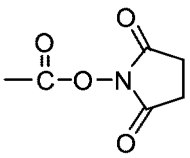 (a)

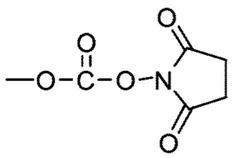 (b)

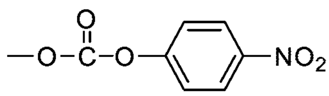 (c)

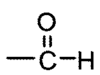 (d)

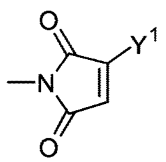 (e)

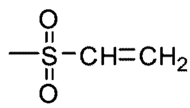 (f)

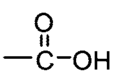 (g)

—SH (h)

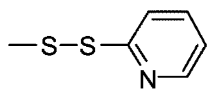 (i)

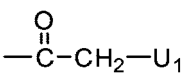 (j)

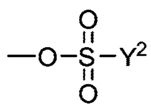 (k)

$-C\equiv C-Y^3$ (l)

$-NH_2$ (m) $-ONH_2$ (n) $-N_3$ (o)

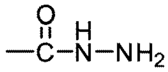 (p)

In the functional group (j), $U_1$ in the formula represents a halogen atom such as a chlorine atom (Cl), a bromine atom (Br) or an iodine atom (I), and is preferably Br or I, and more preferably I.

In the functional group (e) and the functional group (l), $Y^1$, $Y^3$ in the formula each independently represents a hydrogen atom or a hydrocarbon group having 1 to 5 carbon atoms. Specific examples of the hydrocarbon group having 1 to 5 carbon atoms include a methyl group, an ethyl group, a propyl group, an isopropyl group, a butyl group, and a tertiary butyl group. $Y^1$, $Y^3$ in the formula is preferably a hydrogen atom, a methyl group, or an ethyl group.

In the functional group (k), $Y^2$ in the formula represents a hydrocarbon group having 1 to 10 carbon atoms which may contain a fluorine atom, and specific examples thereof include a methyl group, an ethyl group, a propyl group, an isopropyl group, a butyl group, a tertiary butyl group, a hexyl group, a nonyl group, a vinyl group, a phenyl group, a benzyl group, a 4-methylphenyl group, a trifluoromethyl group, a 2,2,2-trifluoroethyl group, and a 4-(trifluoromethoxy)phenyl group, and preferred examples thereof include a methyl group, a vinyl group, a 4-methylphenyl group, and a 2,2,2-trifluoroethyl group.

The active ester group is an ester group having an alkoxy group with a high leaving ability. Examples of the alkoxy group with a high leaving ability include alkoxy groups derived from nitrophenol, N-hydroxysuccinimide, pentafluorophenol, and the like. The active ester group is preferably an ester group having an alkoxy group derived from N-hydroxysuccinimide.

The active carbonate group is a carbonate group having an alkoxy group with a high leaving ability. Examples of the alkoxy group with a high leaving ability include alkoxy groups derived from nitrophenol, N-hydroxysuccinimide, pentafluorophenol, and the like. The active carbonate group is preferably a carbonate group having an alkoxy group derived from nitrophenol or N-hydroxysuccinimide.

The substituted maleimide group is a maleimide group in which a hydrocarbon group is bonded to one of carbon atoms of a double bond of the maleimide group. Specific examples of the hydrocarbon group include a methyl group, an ethyl group, a propyl group, an isopropyl group, a butyl group, and a tertiary butyl group, and preferred examples thereof include a methyl group and an ethyl group.

The substituted sulfonate group is a sulfonate group in which a hydrocarbon group which may contain a fluorine atom is bonded to a sulfur atom of the sulfonate group. Specific examples of the hydrocarbon group which may contain a fluorine atom include a methyl group, an ethyl group, a propyl group, an isopropyl group, a butyl group, a tertiary butyl group, a hexyl group, a nonyl group, a vinyl group, a phenyl group, a benzyl group, a 4-methylphenyl group, a trifluoromethyl group, a 2,2,2-trifluoroethyl group, and a 4-(trifluoromethoxy)phenyl group, and preferred examples thereof include a methyl group, a vinyl group, a 4-methylphenyl group, and a 2,2,2-trifluoroethyl group.

The functional group serving as a precursor of the functional group capable of reacting with a bio-related substance refers to a functional group at a previous stage in a chemical reaction that produces the functional group capable of reacting with a bio-related substance. For example, a cyano group can be exemplified as a precursor of the functional groups since the cyano group can be hydrolyzed to provide a carboxyl group, and reduced to provide an aldehyde group or an amino group. A hydroxyl group can also be exemplified as a precursor since the hydroxyl group can be converted by a chemical reaction into a functional group capable of reacting with a bio-related substance.

A protective group for the functional group capable of reacting with a bio-related substance is a moiety that prevents or blocks reaction of a particular chemically reactive functional group under certain reaction conditions. The functional group protected by the protective group can be deprotected, that is, be chemically reacted, using reaction conditions appropriate for each protective group, to regenerate the original functional group. The type of the protective group is not particularly limited, and can be selected from various types depending on the type of the chemically reactive functional group to be protected, conditions during use, and presence of other functional groups or protective groups in a molecule, and specific examples can be found in many general books (see Non-patent Literature 2 above). For example, examples of a protective group for a hydroxyl group include a benzyl group, a p-methoxyphenylbenzyl group, a methoxymethyl group, a tert-butyl group, a trimethylsilyl group, a triethylsilyl group, a tertbutyldimethylsilyl group, an acetyl group, a benzoyl group, and a trityl group. Examples of a protective group for a carboxyl group include a methyl ester group, an ethyl ester group, a benzyl ester group, and a tert-butyl ester group. Examples of a protective group for an amino group include a tert-butoxycarbonyl group, a benzyloxycarbonyl group, a 9-fluorenylmethyloxycarbonyl group, a 2,2,2-trichloroethoxycarbonyl group, an allyloxycarbonyl group, a phthaloyl group, a p-toluenesulfonyl group, and a 2-nitrobenzenesulfonyl group. Examples of a protective group for an aldehyde group include a dimethylacetal group, a diethylacetal group, a cyclic acetal group, and a dithioacetal group. Examples of a protective group for a thiol group include the same as those of the protective group for a hydroxyl group mentioned above.

The polyethylene glycol derivative of the present invention is a polyethylene glycol derivative having one or more of a functional group capable of reacting with a bio-related substance, a functional group serving as a precursor of the functional group, or a protective group for the functional group.

(Step (A))

A step (A) is a step of preparing a crude polyethylene glycol derivative containing a polyethylene glycol derivative having one or more of a functional group capable of reacting with a bio-related substance, a functional group serving as a precursor of the functional group, or a protective group for the functional group, and impurities.

In the step (A), in production of the polyethylene glycol derivative, after a reaction step or other treatment steps, a solution in which the impurities and the polyethylene glycol derivative are dissolved is reprecipitated by adding an organic solvent, which is a poor solvent, to the solution to precipitate the crude polyethylene glycol derivative. Then, the crude polyethylene glycol derivative may be separated and recovered from a mixed organic solvent by stirring at a specific temperature for a certain period of time.

The crude polyethylene glycol derivative is a composition containing the polyethylene glycol derivative and the impurities.

The impurities are impurities contained in the polyethylene glycol derivative, specifically, low molecular weight compounds used in the reaction for producing the polyethylene glycol derivative and by-products generated in use of these compounds. Examples of such compounds include N-hydroxysuccinimide (NHS), N,N'-dicyclohexylcarbodiimide (DCC), N-succinimidyl-6-maleimidohexanoic acid (SMH), N-succinimidyl-3-maleimidopropionic acid (SMP), and di(N-succinimidyl)carbonate (DSC), which are used in a derivatization reaction expressed by Formulas (1), (2), (3), (4), and (5), and examples of such by-products include di(N-succinimidyl)glutaric acid (Glu-diNHS) and N,N'-dicyclohexylurea (DCU), which are by-produced in a reaction using glutaric anhydride, NHS, and DCC, and N-succinimidoxycarbonyl-β-alanine-N-succinimidyl ester (β-Ala-diNHS), which is by-produced in a reaction using NHS and DCC. B-Ala-diNHS is known to be produced by a mechanism shown in Formula (6) (see Non-patent Literature 3 mentioned above).

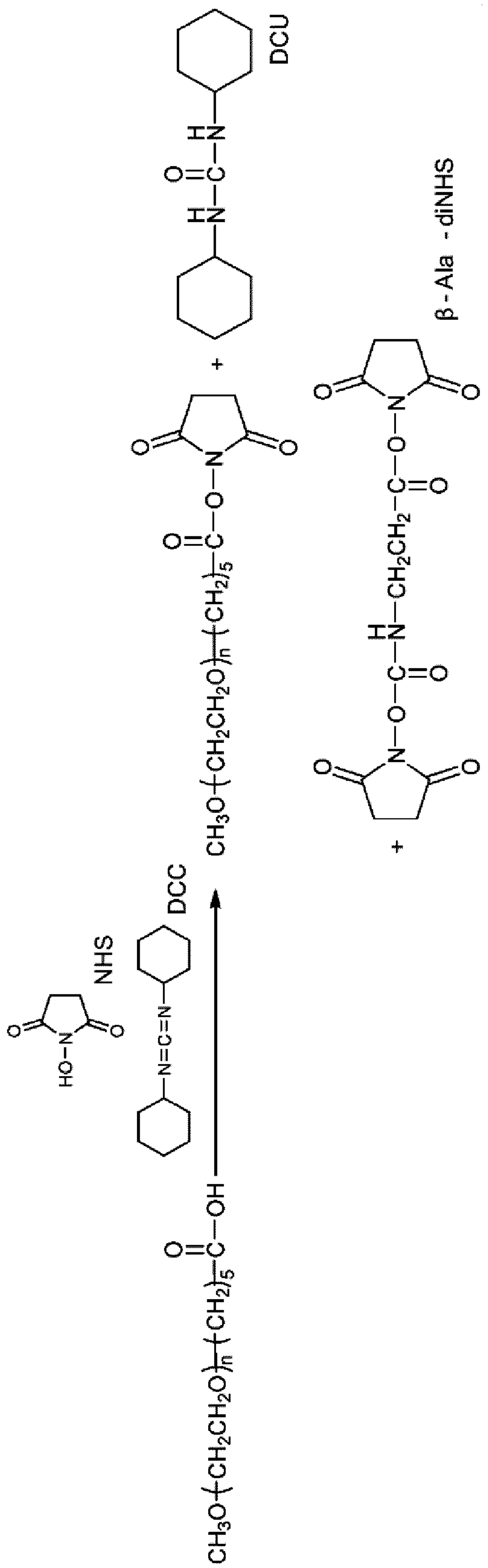


・・・(1)

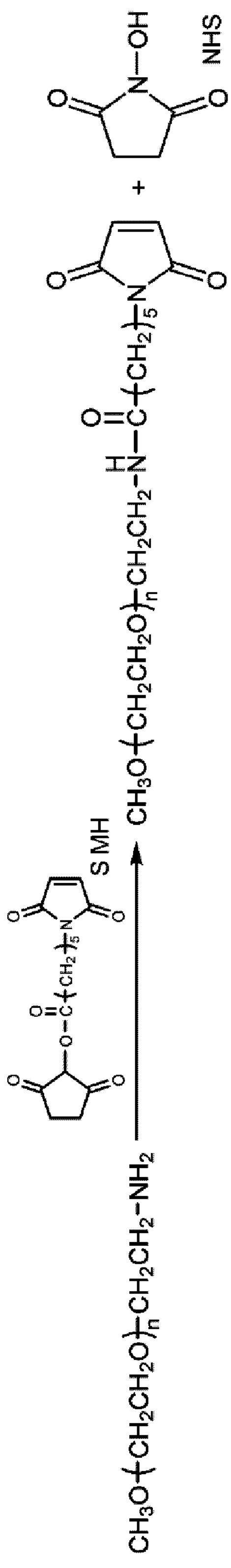


・・・(2)

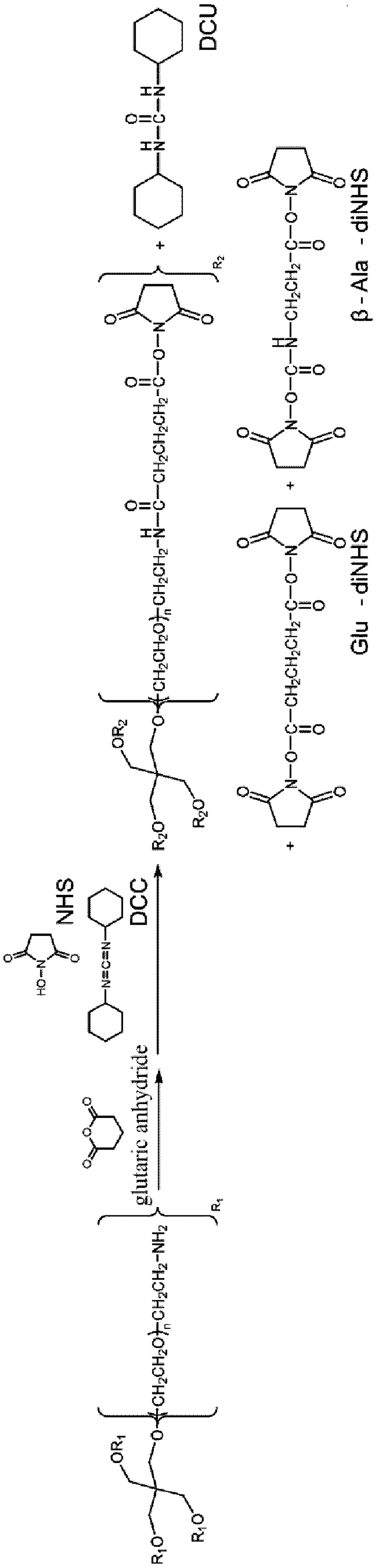


・・・(3)

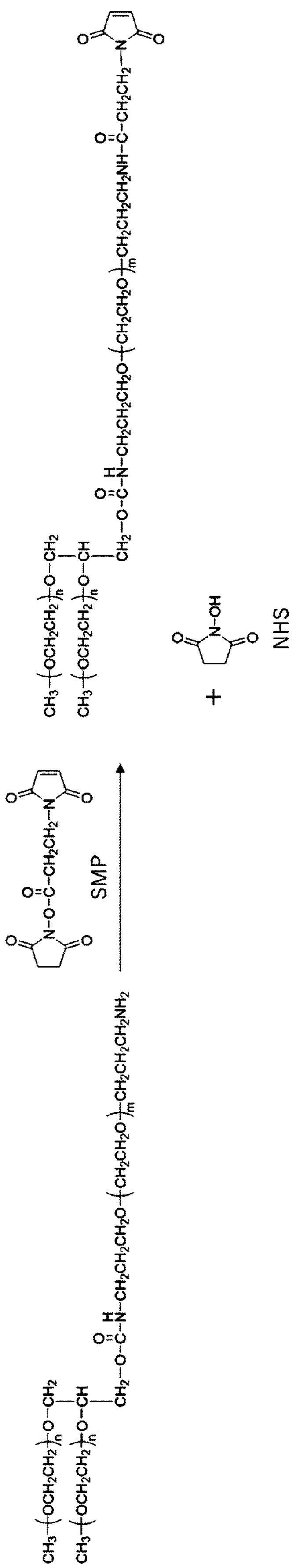


・・・（4）

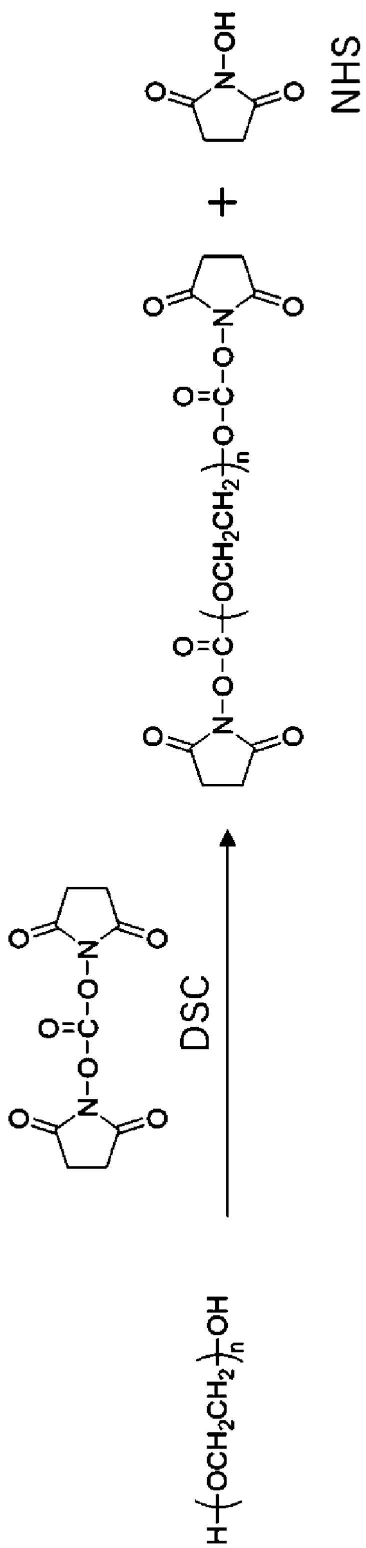


(5)

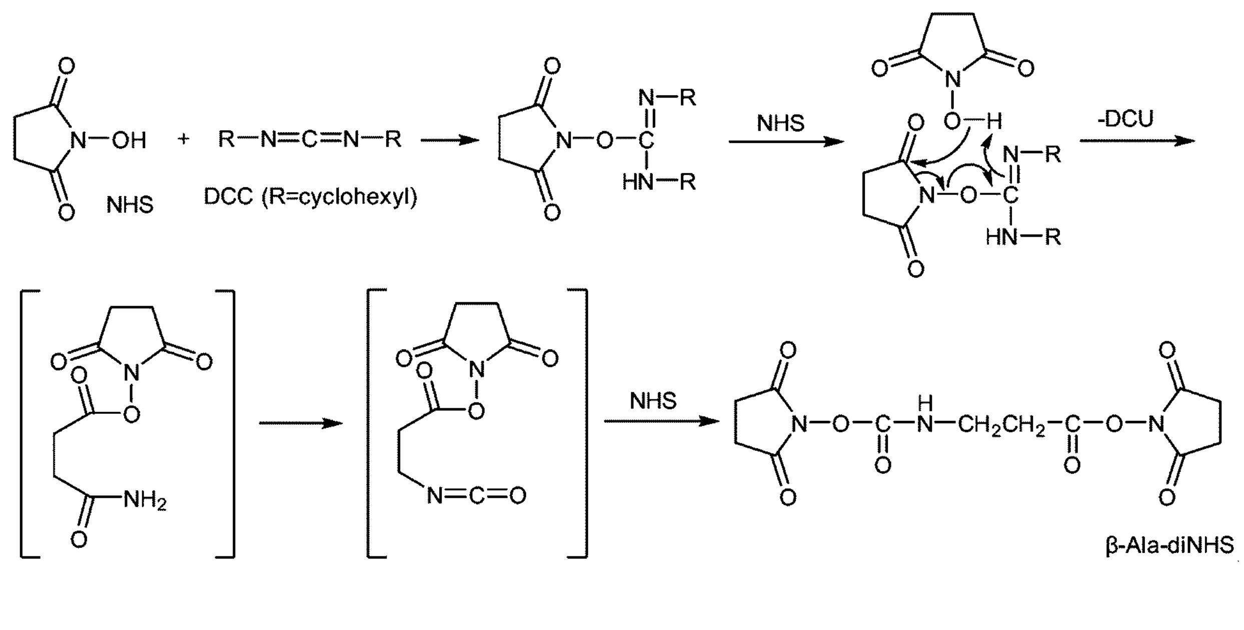

NHS DCC (R=cyclohexyl)

β-Ala-diNHS

· · · (6)

(Step (B))

A step (B) is a step in which the crude polyethylene glycol derivative obtained in the step (A) is made into a slurry using a mixed organic solvent containing an organic solvent A and an organic solvent B, and the slurry is subjected to repulping washing (washing with a solvent that does not dissolve a target substance but only dissolves impurities), and then the polyethylene glycol derivative is separated and recovered from the mixed organic solvent.

In the repulping washing of the present invention, a previously prepared mixed organic solvent is added to the crude polyethylene glycol derivative to form a slurry, which is then stirred and washed at a specified temperature (T)°C for a specified time (stirring time).

First, a previously prepared mixed organic solvent of the organic solvent A and the organic solvent B is added to the crude polyethylene glycol derivative containing impurities prepared in the step (A) to perform repulping washing. Then, the slurry is stirred at a specific temperature for a certain period of time, and the polyethylene glycol derivative is recovered from the mixed organic solvent.

As compared with reprecipitation, the present step does not require work of dissolving the polyethylene glycol derivative in a good solvent by heating and work of precipitating by adding a poor solvent, and has an advantage of reducing the number of steps as compared with a method for purification in which redissolution in a solvent and reprecipitation are repeated.

In the reprecipitation method, the polyethylene glycol derivative (particularly polyethylene glycol having a number average molecular weight of 2,000 or more) is hardly soluble in the good solvent for reprecipitation, such as ethyl acetate and toluene, at room temperature, and therefore require heating to dissolve. Repulping washing the polyethylene glycol derivative eliminates the need for a heating and dissolving step, thereby reducing a heat history as compared with the reprecipitation method and preventing oxidative decomposition of PEG chains.

By repeating the step (B), a content of the impurities can be reduced. The number of times that the step (B) is repeated is not particularly limited, and it is preferable to repeat the step (B) a plurality of times. Specifically, the number of times that the step (B) is repeated is preferably from 1 time to 20 times, more preferably from 1 time to 15 times, and still more preferably from 2 times to 10 times. However, from the viewpoint of productivity, the number of times of the step (B) is preferably 10 or less.

The organic solvent A used in the present invention is xylene, toluene, benzene, methyl acetate, ethyl acetate, butyl acetate, acetonitrile, acetone, N,N-dimethylformamide (DMF), dimethyl sulfoxide (DMSO), chloroform, dichloromethane, and a mixed solvent of combinations thereof.

However, when the organic solvent A is acetonitrile, acetone, N,N-dimethylformamide (DMF), dimethyl sulfoxide (DMSO), chloroform, or dichloromethane, using the organic solvent A alone may change properties of a precipitate during repulping washing, which may deteriorate the workability when separating and recovering the polyethylene glycol derivative from the organic solvent. For this reason, acetonitrile, acetone, N,N-dimethylformamide (DMF), dimethylsulfoxide (DMSO), chloroform, and dichloromethane are preferably used in combination with xylene, toluene, benzene,

methyl acetate, ethyl acetate, and butyl acetate.

The organic solvent B is selected from the group consisting of pentane, hexane, heptane, diethyl ether, methyl tert-butyl ether (MTBE), and combinations thereof.

In a particularly preferred embodiment, in terms of efficiency in purifying the polyethylene glycol derivative which is the object of the present invention, the organic solvent A is one or more solvents selected from the group consisting of xylene, toluene, benzene, methyl acetate, ethyl acetate, butyl acetate, and acetonitrile, and the organic solvent B is hexane or heptane. More preferably, the organic solvent A is one or more solvents selected from the group consisting of toluene, ethyl acetate, and acetonitrile, and the organic solvent B is one or two solvents selected from the group consisting of hexane and heptane. Still more preferably, the organic solvent A is ethyl acetate or a mixture of acetonitrile and ethyl acetate, and the organic solvent B is hexane.

A range of $Y \times T$ in the steps of the present invention is $0.5 \leq Y \times T \leq 30$. That is, Y and T satisfy the relation of $0.5 \leq Y \times T \leq 30$.

Y is a mass ratio of the organic solvent A to a total mass of the organic solvent A and the organic solvent B (mass of organic solvent A/(mass of organic solvent A + mass of organic solvent B)). The organic solvent A is the above-mentioned good solvent for the polyethylene glycol derivative, and the organic solvent B is the above-mentioned poor solvent for the polyethylene glycol derivative. The larger the value of Y, the higher the proportion of the good solvent, and therefore the higher the solubility of the polyethylene glycol derivative and the impurities. The smaller the value of Y, the higher the proportion of the poor solvent, and therefore the lower the solubility of the polyethylene glycol derivative and the impurities. A range of Y is suitably between 0.5 and 0.9, preferably between 0.5 and 0.8, and more preferably between 0.5 and 0.7.

T is the temperature at which the repulping washing is performed. The larger the T, the higher the solubility of the polyethylene glycol derivative and the impurities, and the smaller the T, the lower the solubility of the polyethylene glycol derivative and the impurities. A range of T is preferably between 1°C and 33°C, more preferably between 5°C and 30°C, and still more preferably between 10°C and 26°C.

Furthermore, when $Y \times T$ is large, the polyethylene glycol derivative dissolves, which makes the recovery difficult. When $Y \times T$ is small, purification efficiency decreases. From this viewpoint, the range of $Y \times T$ is 0.1 to 30, preferably 3 to 27, more preferably 5 to 25, and still more preferably 7 to 20.

The stirring time during repulping washing is not particularly limited, and is preferably 5 minutes to 6 hours, more preferably 10 minutes to 3 hours, and still more preferably 15 minutes to 2 hours. Atmosphere in which the repulping washing operation is performed is not particularly limited, and is preferably performed in presence of an inert gas such as nitrogen or argon typically, for a purpose of minimizing oxidation. An apparatus for the repulping washing is not particularly limited, and the repulping washing may be performed in a pressure-resistant vessel in consideration of the operation under nitrogen and in a sealed state in which oxidative degradation of the polyethylene glycol derivative is unlikely to occur.

The mass (total value) of the organic solvent A and the mass (total value) of the organic solvent B used are each preferably 1 time to 50 times, and more preferably 1 time to 20 times, the mass of the polyethylene glycol derivative.

(Step (C))

The step (C) is a step of dissolving the polyethylene glycol derivative obtained in the step (B) in a good solvent, and then recovering the polyethylene glycol derivative from the good solvent. The step (C) is a step for redissolving the polyethylene glycol derivative, which is nonuniform in quality in the step (B), to make the quality uniform.

The polyethylene glycol derivative obtained in the step (B) is dissolved by being added with the good solvent. The good solvent is preferably xylene, toluene, benzene, methyl acetate, ethyl acetate, butyl acetate, acetonitrile, acetone, N,N-dimethylformamide (DMF), dimethylsulfoxide (DMSO), chloroform, dichloromethane, and combinations thereof. Such a good solvent is preferably xylene, toluene, benzene, methyl acetate, ethyl acetate, butyl acetate, or acetonitrile, more preferably ethyl acetate, toluene, or acetonitrile, and still more preferably ethyl acetate or a mixed solvent of ethyl acetate and acetonitrile.

A recovery method is not particularly limited, and the following method is preferred.

A method in which a poor solvent such as hexane or heptane is added to precipitate the polyethylene glycol derivative, and then the polyethylene glycol derivative is recovered by filtration or decantation (including removal of a supernatant liquid)

A method of recovering the polyethylene glycol derivative by freeze-drying
A method of recovering the polyethylene glycol derivative by evaporation to dryness

The method for filtering the polyethylene glycol derivative from the good solvent is not particularly limited, and is preferably filtration under reduced pressure, pressure filtration, and centrifugal filtration.

Through the steps (A) to (C), an antioxidant such as dibutylhydroxytoluene (BHT) can be added to the system to prevent oxidative degradation of the polyethylene glycol derivative.

EXAMPLES

The present invention will be described in more detail with reference to Examples.

A molecular weight and polydispersity of the polyethylene glycol derivative were measured using a GPC system LC-10Avp (Shimadzu) under the following conditions.

GPC apparatus: LC-10Avp (Shimadzu)
Developer: DMF (10mM LiBr)
Flow rate: 0.7 ml/min
Column: PL gel MIXED-D (Polymer Laboratory)
Column temperature: 65°C
Detector: RI
Sample concentration (injection volume): 30 mg/30 mL (100 μl)
A calibration curve was prepared using the polyethylene glycol derivative as a standard substance.

(Method for quantifying impurities contained in crude polyethylene glycol derivative)

A content of β-Ala-diNHS in the polyethylene glycol derivative was measured using an HPLC system alliance (Waters) under the following conditions.

HPLC apparatus: alliance (Waters)
Flow rate: 1.0 ml/min
Column: ODS column Inertsil ODS-3 (GL Sciences)
Column temperature: 40°C
Detector: UV (194 nm)
Injection volume: 10 μl (100 mg/mL)
Analysis time: 40 min
Mobile phase: Mobile phase A (water/acetonitrile = 7/3, 0.02% phosphoric acid)
Mobile phase B (water/acetonitrile = 2/8, 0.02% phosphoric acid)
Gradient conditions

| Time | %A | %B |
|---|---|---|
| 0 min | 100% | 0% |
| 15 min | 100% | 0% |
| 19 min | 0% | 100% |
| 23 min | 100% | 0% |
| 40 min | 100% | 0% |

A content of NHS, a content of SMP, and a content of DSC in the polyethylene glycol derivative were measured using $^1$H-NMR under the following conditions.

NMR apparatus: JNM-ECP400 (JEOL-NMR) or JNM-ECA600 (JEOL-NMR)
Temperature: 25°C
Number of times of accumulation: 128 or 512
Sample concentration: 20 mg/0.7 mL

A content of DCU in the polyethylene glycol derivative was measured using an HPLC system alliance (Waters) under the following conditions.

HPLC apparatus: alliance (Waters)
Flow rate: 1.0 ml/min
Column: ODS column Inertsil-ODS-3 (GL Sciences)
Column temperature: 30°C
Detector: UV (201 nm)
Injection volume: 100 μl (10 mg/mL)
Analysis time: 35 min

Mobile phase: Mobile phase C (water/acetonitrile = (5/5)
Mobile phase D (water/acetonitrile = 0/10)
Gradient conditions

| Time | %C | %D |
|---|---|---|
| 0 min | 100% | 0% |
| 15 min | 100% | 0% |
| 20 min | 0% | 100% |

A content of SMH in the polyethylene glycol derivative was measured using an HPLC system alliance (Waters) under the following conditions.

HPLC apparatus: alliance (Waters)
Flow rate: 1.0 ml/min
Column: ODS column Inertsil ODS-3 (GL Sciences)
Column temperature: 40°C
Detector: UV (220 nm)
Injection volume: 10 μl (20 mg/mL)
Analysis time: 300 min
Mobile phase: Mobile phase E (water/acetonitrile = 55/45, 0.1% acetic acid)
Mobile phase F (water/acetonitrile = 2/8, 0.1% acetic acid)
Gradient conditions

| Time | %E | %F |
|---|---|---|
| 0 min | 100% | 0% |
| 15 min | 100% | 0% |
| 19 min | 0% | 100% |
| 23 min | 100% | 0% |
| 40 min | 100% | 0% |

The content of Glu-diNHS in the polyethylene glycol derivative was measured using an HPLC system alliance (Waters) under the following conditions.

HPLC apparatus: alliance (Waters)
Flow rate: 1.0 ml/min
Column: ODS column Inertsil ODS-3 (GL Sciences)
Column temperature: 40°C
Detector: UV (194 nm)
Injection volume: 10 μl (20 mg/mL)
Analysis time: 40 min
Mobile phase: Mobile phase G (water/acetonitrile = 7/3, 0.1% acetic acid)
Mobile phase H (water/acetonitrile = 2/8, 0.1% acetic acid)
Gradient conditions

| Time | %G | %H |
|---|---|---|
| 0 min | 100% | 0% |
| 15 min | 100% | 0% |
| 19 min | 0% | 100% |
| 23 min | 100% | 0% |
| 40 min | 100% | 0% |

A content of DTT in the polyethylene glycol derivative was measured using an HPLC system alliance (Waters) under the following conditions.

HPLC apparatus: alliance (Waters)
Flow rate: 1.0 ml/min
Column: ODS column Inertsil ODS-3 (GL Sciences)
Column temperature: 30°C
Detector: UV (197 nm)
Injection volume: 100 μl (10 mg/mL)
Analysis time: 20 min
Mobile phase: Mobile phase I (10 mmol/L phosphate buffer/acetonitrile = 9/1)

(Example 1)

Into a 300 mL four-neck flask mounted with a mechanical stirrer, a Dimroth condenser, a thermometer, and a nitrogen inlet tube, 37 g of α-(5-carboxypentyl)-ω-methoxypoly(oxyethylene) (molecular weight: 20,000) and 111 g of toluene were placed and dissolved at 45°C with stirring under nitrogen. Then, 427 mg of N-hydroxysuccinimide and 840 mg of dicyclohexylcarbodiimide were added, and reacted at 42°C for 2 hours. Then, 74 g of toluene was added for dilution, followed by filtration to remove insoluble substances.

A filter cake was washed with 37 g of toluene, mixed with the previously obtained filtrate, and then diluted with 74 g of ethyl acetate. Then, 130 g of hexane was added to perform reprecipitation. The slurry was stirred at 15°C for 15 minutes and then filtered to recover the crude polyethylene glycol derivative (step (A)). Contents of the impurities were β-Ala-diNHS: 2819 ppm, and DCU: 3169 ppm.

A previously prepared mixed organic solvent (ethyl acetate: 133 g/hexane: 55.5 g) was added to the obtained crude polyethylene glycol derivative, and the mixture was stirred at 15°C for 45 minutes for repulping washing, and then filtered to recover the polyethylene glycol derivative. This operation was repeated 6 times, and a total of 7 times of repulping washing was performed (step (B)).

After the repulping washing was completed, 222 g of ethyl acetate was added to the obtained polyethylene glycol derivative to dissolve at 40°C, and then 92.5 g of hexane was added to cause reprecipitation. After stirring at 15°C for 15 minutes, the mixture was filtered to recover the polyethylene glycol derivative (step (C)). The obtained polyethylene glycol derivative was washed with 148 g of hexane and then dried in vacuum to obtain a compound of Formula (7).

The contents of the impurities were β-Ala-diNHS: 8 ppm, and DCU: 13 ppm. In the repulping washing of the present example, Y = 0.7, T = 15, and Y × T = 10.5.

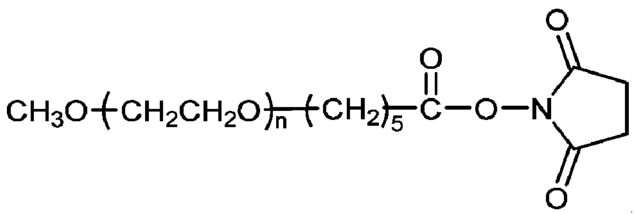

n = approximately 455 · · · (7)

(Example 2)

Into a 30 L reaction tank mounted with a mechanical stirrer, a Dimroth condenser, a thermometer, and a nitrogen inlet tube, 5500 g of α-(5-carboxypentyl)-ω-methoxypoly(oxyethylene) (molecular weight: 10,000) and 16.5 kg of toluene were placed and dissolved at 45°C with stirring under nitrogen. Then, 90.52 g of N-hydroxysuccinimide and 147.53 g of dicyclohexylcarbodiimide were added, and reacted at 45°C for 4 hours. The mixture was filtered to remove insoluble substances, and a filter cake was washed with 11.0 kg of toluene. The obtained filtrate was diluted with 11.0 kg of ethyl acetate, and 16.5 kg of hexane was added thereto to perform reprecipitation. The mixture was stirred at 22°C for 90 minutes and then filtered to recover the crude polyethylene glycol derivative (step (A)).

A previously prepared mixed organic solvent (ethyl acetate: 38.5 kg/hexane: 16.5 kg/BHT: 7.7 g) was added to the obtained crude polyethylene glycol derivative, and the mixture was stirred at 22°C for 30 minutes for repulping washing, and then filtered to recover the polyethylene glycol derivative. This operation was repeated 4 times, and a total of 5 times of repulping washing was performed (step (B)).

To the obtained polyethylene glycol derivative, 38.5 kg of ethyl acetate and 7.7 g of BHT were added to dissolve at 40°C, and then 16.5 kg of hexane was added to cause reprecipitation. After stirring at 22°C for 30 minutes, the mixture was filtered to recover the polyethylene glycol derivative (step (C)). The obtained polyethylene glycol derivative was washed

with 22.0 kg of hexane in which 4.4 g of BHT was dissolved, and then dried in vacuum to obtain a compound of Formula (8).

A content of an impurity β-Ala-diNHS was 0.3 ppm. In the repulping washing of the present example, Y = 0.7, T = 22, and Y × T = 15.4. A total time for the steps was 64 hours and 26 minutes.

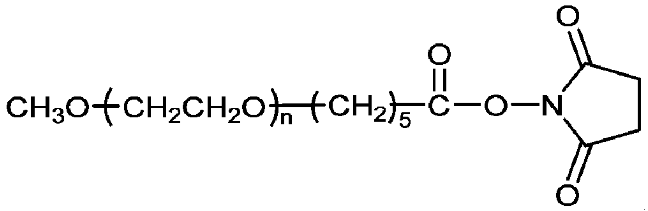

n = approximately 227 ・・・(8)

(Example 3)

Into a 50 L reaction tank mounted with a mechanical stirrer, a condenser, and a thermometer, 4900 g of α-(5-carboxypentyl)-ω-methoxypoly(oxyethylene) (molecular weight: 30,000) and 24.5 kg of toluene were placed and dissolved at 40°C with stirring under nitrogen. Then, 41.36 g of N-hydroxysuccinimide and 67.40 g of dicyclohexylcarbodiimide were added, and reacted at 45°C for 3 hours. The mixture was filtered to remove insoluble substances, and a filter cake was washed with 4.9 kg of toluene. The obtained filtrate was diluted with 9.8 kg of ethyl acetate and 2.5 kg of acetonitrile, and 34.3 kg of hexane was added thereto to perform reprecipitation. The mixture was stirred at 26°C for 90 minutes and then filtered to recover the crude polyethylene glycol derivative (step (A)).

A previously prepared mixed organic solvent (ethyl acetate: 19.6 kg/toluene: 19.6 kg/acetonitrile: 2.5 kg/hexane: 34.3 kg/BHT: 7.84 g) was added to the obtained crude polyethylene glycol derivative, and the mixture was stirred at 26°C for 30 minutes for repulping washing, and then filtered to recover the polyethylene glycol derivative. This operation was repeated 3 times, and a total of 4 times of repulping washing was performed (step (B)).

To the obtained polyethylene glycol derivative, 19.6 kg of ethyl acetate, 19.6 kg of toluene, 2.5 kg of acetonitrile, and 7.84 g of BHT were added to dissolve at 40°C, and then 16.5 kg of hexane was added to cause reprecipitation. After stirring at 22°C for 30 minutes, the mixture was filtered to recover the polyethylene glycol derivative (step (C)). The obtained polyethylene glycol derivative was washed with 29.4 kg of hexane for 2 times and then dried in vacuum to obtain a compound of Formula (9).

A content of an impurity β-Ala-diNHS was 6 ppm. In the repulping washing of the present example, Y = 0.5, T = 26, and Y × T = 13.0.

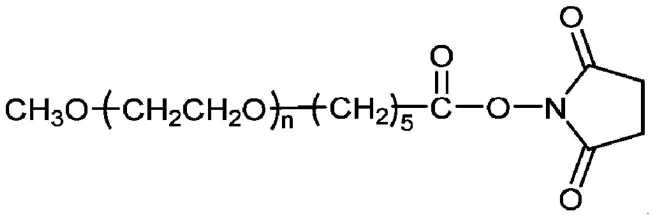

n = approximately 682 ・・・(9)

(Example 4)

Into a 100 mL three-neck flask mounted with a mechanical stirrer, a Dimroth condenser, a thermometer, and a nitrogen inlet tube, 10 g of α-(2-aminoethyl)-ω-methoxypoly(oxyethylene) (molecular weight: 20,000) and 40 g of toluene were placed and dissolved at 45°C with stirring under nitrogen. Then, 185 mg of N-succinimidyl 6-maleimidohexanoate (N-SMH) was added and reacted at 42°C for 3 hours. Filtration was performed to remove insoluble substances, and a cake was washed with 10 g of ethyl acetate, and the filtrate was then diluted with 10 g of ethyl acetate. This solution was added to 60 g of hexane to perform reprecipitation. After stirring at 15°C for 15 minutes, the mixture was filtered to recover the crude polyethylene glycol derivative (step (A)).

A previously prepared mixed organic solvent (ethyl acetate: 60 g/hexane: 60 g/BHT: 12 mg) was added to the obtained crude polyethylene glycol derivative, and the mixture was stirred at 15°C for 15 minutes for repulping washing, and then filtered to recover the polyethylene glycol derivative. This operation was repeated 3 times, and a total of 4 times of

repulping washing was performed (step (B)).

To the obtained polyethylene glycol derivative, 60 g of ethyl acetate and 10 mg of BHT were added to dissolve at 40°C, and then 60 g of hexane was added to cause reprecipitation. After stirring at 15°C for 15 minutes, the mixture was filtered to recover the polyethylene glycol derivative (step (C)). The obtained polyethylene glycol derivative was washed with 40 g of hexane and then dried in vacuum to obtain a compound represented by Formula (10).

Contents of impurities were N-SMH: 2 ppm, and NHS: 45 ppm. In the repulping washing of the present example, Y = 0.5, T = 15, and Y × T = 7.5.

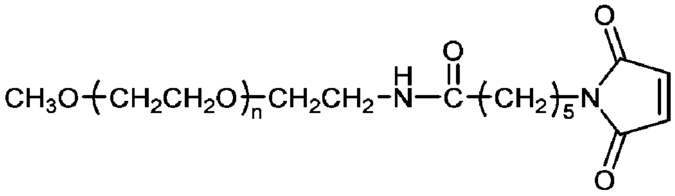

n = approximately 455 ・・・(10)

(Example 5)

Into a 50 L reaction tank mounted with a mechanical stirrer, a condenser, and a thermometer, 3000 g of polyoxyethylene pentaerythritol ether (molecular weight: 20,000), 30.0 g of sodium acetate, and 9.0 kg of toluene were placed and dissolved at 45°C with stirring under nitrogen. Then, 82.15 g of glutaric anhydride was added and reacted at 40°C for 1 hour. Then, 207 g of N-hydroxysuccinimide and 260 g of dicyclohexylcarbodiimide were added, and reacted at 40°C for 3 hours. Filtration was performed to remove insoluble substances, and a filter cake was washed with 3 kg of toluene, mixed with the previously obtained filtrate, and then diluted with 12 kg of ethyl acetate. Then, 12 kg of hexane was added to perform reprecipitation. The mixture was stirred at 19°C for 1 hour and then filtered to recover the crude polyethylene glycol derivative (step (A)).

A previously prepared mixed organic solvent (ethyl acetate: 24 kg/acetonitrile: 1.2 kg/hexane: 12 kg/BHT: 4.8 g) was added to the obtained crude polyethylene glycol derivative, and the mixture was stirred at 19°C for 30 minutes for repulping washing, and then filtered to recover the polyethylene glycol derivative. This operation was repeated 4 times, and a total of 5 times of repulping washing was performed (step (B)).

To the obtained polyethylene glycol derivative, 24 kg of ethyl acetate, 1.2 kg of acetonitrile, and 4.8 g of BHT were added to dissolve at 40°C, and then 12 kg of hexane was added to cause reprecipitation. After stirring at 19°C for 1 hour, the mixture was filtered to recover the polyethylene glycol derivative (step (C)). The obtained polyethylene glycol derivative was washed with 12 kg of hexane in which 2.4 g of BHT was dissolved, and then dried in vacuum to obtain a compound of Formula (11).

Contents of the impurities were β-Ala-diNHS: 198 ppm and Glu-diNHS: 12 ppm. In the repulping washing of the present example, Y = 0.7, T = 19, and Y × T = 13.3.

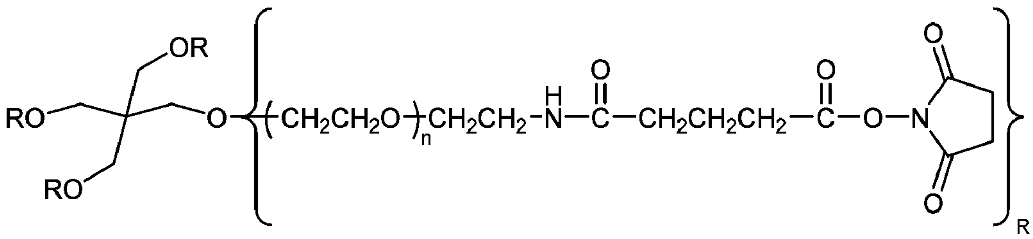

n = approximately 57 ・・・(11)

(Example 6)

Into a 50 L reaction tank mounted with a mechanical stirrer, a condenser, and a thermometer, 4000 g of α-methanesulfonyl-ω-methanesulfonyloxypolyoxyethylene (molecular weight: 3,400), 0.94 kg of thiourea, and 8.0 kg of 2-propanol were placed and dissolved at 45°C with stirring under nitrogen, and then reacted at 80°C for 4 hours. Then, 16.0

kg of UFW was added and the mixture was concentrated to distill off 2-propanol. To the obtained residue, 0.726 kg of dithiothreitol (DTT), 0.16 kg of BHT, and 4.6 kg of a 400 g/L sodium hydroxide solution were added, and a hydrolysis reaction was performed at 70°C for 3 hours. Then, 6 kg of 6N HCl was added to neutralize the mixture, and 4.0 kg of ordinary salt was added and dissolved. Then, 28.0 kg of chloroform was added and stirred. After separation, the chloroform layer was recovered and subjected to extraction. The remaining aqueous layer was added with 28.0 kg of chloroform and extracted once again. The solutions obtained from the two extraction procedures were mixed, and added with 40.0 kg of 20% saline and stirred to wash. After separation, the aqueous layer was discarded, and the remaining chloroform layer was washed with 40.0 kg of 20% saline for 2 times, and a total of 3 times of washing was performed. The chloroform layer was concentrated under a reduced pressure, and 16.0 kg of ethyl acetate was added to the obtained residue, followed by stirring and filtration to remove insoluble substances. A cake was washed with 4.0 kg of ethyl acetate and mixed with the previous filtrate. This solution was added to 24.0 kg of hexane to perform reprecipitation. After stirring at 15°C for 30 minutes, the mixture was filtered to recover the crude polyethylene glycol derivative (step (A)).

To the obtained crude polyethylene glycol derivative, a previously mixed solution ethyl acetate: 12.0 kg/toluene: 4.0 kg/hexane: 16.0 kg) was added and stirred at 20°C for 30 minutes to perform repulping washing, and then filtered to recover the polyethylene glycol derivative (step (B)).

To the obtained polyethylene glycol derivative, 12.0 kg of ethyl acetate and 4.0 kg of toluene were added to dissolve at 40°C, and then 16.0 kg of hexane was added to cause reprecipitation. After stirring at 20°C for 30 minutes, the mixture was filtered to recover the polyethylene glycol derivative (step (C)). The obtained polyethylene glycol derivative was washed with 16.0 kg of hexane and then dried in vacuum to obtain a compound of Formula (12).

A content of an impurity, which is DTT, was 120 ppm. In the repulping washing of the present example, Y = 0.5, T = 20, and Y × T = 10.0.

$$SH-CH_2CH_2-O\left(CH_2CH_2O\right)_n CH_2CH_2-SH$$

n = approximately 77 ・・・(12)

(Example 7)

Into a 200 mL three-neck flask mounted with a mechanical stirrer, a Dimroth condenser, a thermometer, and a nitrogen inlet tube, 10 g of 2,3-bis(methylpolyoxyethylene-oxy)-1-[(3-aminopropyl)polyoxyethylene-oxypropylaminocarbonyl-oxy]-propane (molecular weight: 53,000), 52 g of toluene, and 8 g of acetonitrile were placed and dissolved at 40°C with stirring under nitrogen. Then, 97 mg of N-methylmorpholine and 77 mg of N-succinimidyl-3-maleimidopropionic acid (SMP) were added and reacted at 25°C for 3 hours. After diluting with 40 g of ethyl acetate, filtration was performed to remove insoluble substances, and a cake was washed with 20 g of ethyl acetate. This solution was added with 60 g of hexane to perform reprecipitation. After stirring at 25°C for 15 minutes, the mixture was filtered to recover the crude polyethylene glycol derivative (step (A)).

A previously prepared mixed organic solvent (ethyl acetate: 120 g/hexane: 60 g/BHT: 24 mg) was added to the obtained crude polyethylene glycol derivative, and the mixture was stirred at 25°C for 15 minutes for repulping washing, and then filtered to recover the polyethylene glycol derivative. This operation was repeated 2 times, and a total of 3 times of repulping washing was performed (step (B)).

To the obtained polyethylene glycol derivative, 120 g of ethyl acetate and 24 mg of BHT were added to dissolve at 40°C, and then 60 g of hexane was added to cause reprecipitation. After stirring at 25°C for 15 minutes, the mixture was filtered to recover the polyethylene glycol derivative (step (C)). The obtained polyethylene glycol derivative was washed with 60 g of hexane and 12 mg of BHT and then dried in vacuum to obtain a compound represented by Formula (13).

Contents of the impurities were SMP: 3 ppm, and NHS: 6 ppm. In the repulping washing of the present example, Y = 0.67, T = 25, and Y × T = 16.7.

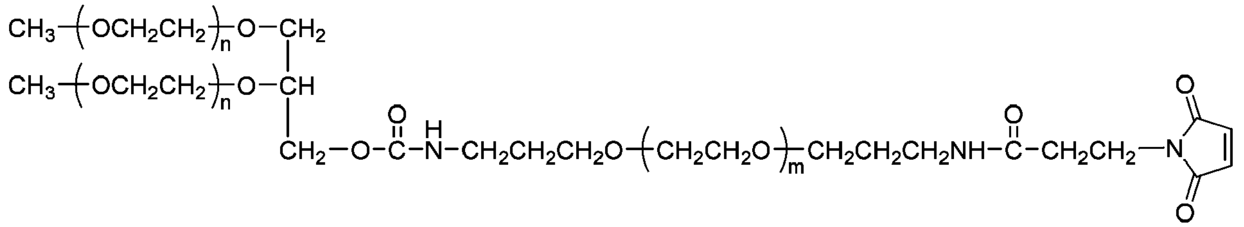

n = approximately 477, m = approximately 227 ・・・(13)

(Example 8)

Into a 30 L reaction tank equipped with a mechanical stirrer, a Dimroth condenser, a thermometer, and a nitrogen inlet tube, 2,300 g of polyethylene glycol (molecular weight: 20,000), 11.5 kg of toluene, and 2 g of BHT were placed and dissolved by heating, followed by reflux dehydration for 1 hour. Then, 177 g of DSC and 82 g of pyridine were added, and reacted at 65°C for 8 hours. After filtering to remove insoluble substances, a filter cake was washed with 7 kg of ethyl acetate and mixed with the previously obtained filtrate, and then 8 kg of hexane was added to perform reprecipitation. After stirring at 25°C for 30 minutes, the mixture was filtered to recover the crude polyethylene glycol derivative (step (A)).

A previously prepared mixed organic solvent (ethyl acetate: 17 kg/hexane: 7 kg/BHT: 3 g) was added to the obtained crude polyethylene glycol derivative, and the mixture was stirred at 25°C for 1 hour for repulping washing, and then filtered to recover the polyethylene glycol derivative. This operation was repeated 3 times, and a total of 4 times of repulping washing was performed (step (B)).

To the obtained polyethylene glycol derivative, 17 kg of ethyl acetate and 3 g of BHT were added to dissolve at 40°C, and then 7 kg of hexane was added to cause reprecipitation. After stirring at 25°C for 30 minutes, the mixture was filtered to recover the polyethylene glycol derivative (step (C)). The obtained polyethylene glycol derivative was washed with 9 kg of hexane in which 2 g of BHT was dissolved, and then dried in vacuum to obtain a compound of Formula (14).

Contents of impurities were DSC: not detected, NHSI: 9 ppm. In the repulping washing of the present example, Y = 0.7, T = 25, and Y × T = 17.5.

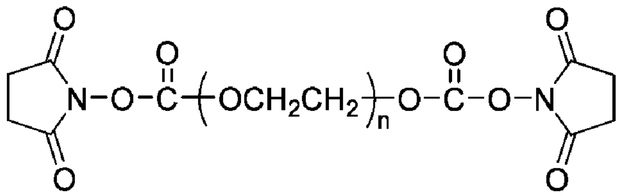

n = approximately 455 ・・・ (14)

(Example 9)

A reaction of α-(5-carboxypentyl)-ω-methoxypoly(oxyethylene) was performed on the same scale and in the same manner as in Example 1. After this reaction, 74 g of ethyl acetate was added to a filtrate after filtration, and a temperature was adjusted to 35°C, and then 130 g of hexane was added to cause reprecipitation, and the mixture was stirred at 25°C for 15 minutes and then filtered to recover the crude polyethylene glycol derivative (step (A)).

A previously prepared mixed organic solvent (ethyl acetate: 133 g/hexane: 55.5 g) was added to the recovered crude polyethylene glycol derivative, and the repulping washing was extended to 20 hours at 35°C (step (B)).

That is, the dissolution time was extended on assumption of repeating the reprecipitation step, and comparison was performed.

(Comparative Example 1)

A reaction of α-(5-carboxypentyl)-ω-methoxypoly(oxyethylene) was performed on the same scale and in the same manner as in Example 1. To a filtrate after the reaction, 74 g of ethyl acetate was added, and a temperature was adjusted to 35°C, and then 130 g of hexane was added to cause reprecipitation, and the mixture was stirred at 25°C for 15 minutes and then filtered to recover the crude polyethylene glycol derivative (step (A)).

The recovered crude polyethylene glycol derivative was dissolved with 185 g of ethyl acetate, and the temperature was adjusted to 55°C, and the dissolution time was extended to 20 hours.

Results of Example 9 and Comparative Example 1 are shown in Table 1 below.

[Table 1]

| | Polydispersity | | | | |
|---|---|---|---|---|---|
| Time (hr.) | 0 | 5 | 10 | 15 | 20 |
| Example 9 | 1.03 | 1.03 | 1.03 | 1.03 | 1.03 |
| Comparative Example 1 | 1.03 | 1.03 | 1.04 | 1.05 | 1.07 |

According to Table 1, as shown in Example 9, extending the stirring time for repulping washing the polyethylene glycol derivative does not result in an increase in polydispersity, but as shown in Comparative Example 1, extending the dissolution time by heating to repeat reprecipitation increases the heat history, resulting in an increase in polydispersity.
Therefore, as compared with reprecipitation, repulping washing was shown to be a superior production method in that it is less likely to cause an increase in polydispersity due to oxidative degradation of the polyethylene glycol even when repulping washing is repeated.
In the following Example 10 and Comparative Example 2, influence of the step (C) on the uniformity of the polyethylene glycol derivative was examined.

(Example 10)

A reaction was performed on the same scale and in the same manner as in Example 1. After the reaction and filtration, a filtrate was diluted with 74 g of ethyl acetate. Then, 130 g of hexane was added to cause reprecipitation. After stirring at 15°C for 15 minutes, the mixture was filtered to recover the crude polyethylene glycol derivative (step (A)).
A previously prepared mixed organic solvent (ethyl acetate: 133 g/hexane: 55.5 g) was added to the obtained crude polyethylene glycol derivative, and the mixture was stirred at 15°C for 45 minutes for repulping washing, and then filtered to recover the polyethylene glycol derivative. This operation was repeated 1 time, and a total of 2 times of repulping washing was performed (step (B)).
To the obtained polyethylene glycol derivative, 222 g of ethyl acetate was added to dissolve at 40°C, and then 92.5 g of hexane was added to cause reprecipitation (step (C)). After stirring at 15°C for 15 minutes, the mixture was filtered, and samples were taken from three randomly selected points of the filtered cake to measure a content of β-Ala-diNHS.

(Comparative Example 2)

The reaction was performed on the same scale and in the same manner as in Example 1. After the reaction and filtration, 74 g of ethyl acetate was added to the filtrate, the temperature was adjusted to 15°C, and then 130 g of hexane was added to perform reprecipitation. The crude polyethylene glycol derivative was recovered by filtration (step (A)).
A previously prepared mixed organic solvent (ethyl acetate: 133 g/hexane: 55.5 g) was added to the crude polyethylene glycol derivative, and the mixture was adjusted to 15°C and stirred for 45 minutes to perform repulping washing. The solution after stirring was filtered to recover the polyethylene glycol derivative, and this operation was performed 3 times (step (B)). The step (C) was not performed.
Samples were taken from three randomly selected points of the filtered cake to measure a content of β-Ala-diNHS.
Results of Example 10 and Comparative Example 2 are shown in Table 2.

[Table 2]

| | Content (ppm) of β-Ala-diNHS | | | SD |
|---|---|---|---|---|
| Example 10 | 215 | 214 | 213 | 1 |
| Comparative Example 2 | 129 | 85 | 84 | 26 |

According to Table 2, in Example 10, an SD value was 1, whereas in Comparative Example 2, a value as high as 26 was shown. This result indicates that uniformity cannot be obtained by the repulping washing in the step (B) alone, and that the step (C) is necessary to obtain a uniform polyethylene glycol derivative.

(Comparative Example 3)

In the following Comparative Example 3, in order to confirm the effect of shortening the time for the steps, all repulping washing was replaced with reprecipitation to perform comparison.
The reaction was performed on the same scale and in the same manner as in Example 2. After the reaction and filtration, a filtrate was diluted with 11.0 kg of ethyl acetate. Then, 16.5 kg of hexane was added to perform reprecipitation. After stirring at 25°C for 15 minutes, the mixture was filtered to recover the crude polyethylene glycol derivative (step (A)).
The obtained crude polyethylene glycol derivative was dissolved with 38.5 kg of ethyl acetate, and adjusted to 36°C, and then, 16.5 kg of hexane was added to cause reprecipitation, and the mixture was stirred at 22°C for 30 minutes and then filtered to recover the polyethylene glycol derivative. This operation was repeated 4 times, and a total of 5 times of reprecipitation were performed, and then 38.5 kg of ethyl acetate was added to the obtained polyethylene glycol derivative

to dissolve at 40°C, and then 16.5 kg of hexane was added to perform reprecipitation. After stirring at 25°C for 30 minutes, filtration was performed to recover the polyethylene glycol derivative. The obtained polyethylene glycol derivative was washed with 22.0 kg of hexane and then dried in vacuum to obtain a target substance.

A total time for the steps was 73 hours and 11 minutes.

Results of Example 2 and Comparative Example 3 show that the time for the steps can be shortened by changing reprecipitation to repulping washing.

[Table 3]

| | Total time for steps |
|---|---|
| Example 2 | 64 hours and 26 minutes |
| Comparative Example 3 | 73 hours and 11 minutes |

(Comparative Example 4)

In Comparative Example 4, a comparative study was carried out to see whether purification was possible with the repulping washing condition set as Y × T = 31.5 while the same conditions as in Example 1 were used.

Specifically, in Example 1, a mixed solvent of ethyl acetate: 170 g/hexane: 18.9 g (Y = 0.9) was used during repulping washing, and the solution was adjusted to 35°C (T = 35), and stirred for 45 minutes to perform repulping washing. Filtration was performed to recover the polyethylene glycol derivative as a residue, and the filtrate was then concentrated, whereby 4.4 g (12% of the total weight) of the polyethylene glycol derivative was recovered from the filtrate.

Results of Comparative Example 4 show that when Y × T in the repulping washing exceeds an upper limit, the polyethylene glycol derivative dissolves in the mixed solvent.

(Comparative Example 5)

A comparative study was carried out to see whether purification was possible with the repulping washing condition set as Y × T = 0.1 while the same conditions as in Example 1 were used.

That is, a reaction was performed on the same scale and in the same manner as in Example 1. After the reaction and filtration, a filtrate was diluted with 74 g of ethyl acetate. Then, 130 g of hexane was added to cause reprecipitation. After stirring at 15°C for 15 minutes, the mixture was filtered to recover the crude polyethylene glycol derivative (step (A)).

A previously prepared mixed organic solvent (ethyl acetate: 18.9 g/hexane: 170 g (Y = 0.1)) was added to the obtained crude polyethylene glycol derivative, and the mixture was stirred at 1°C (T = 1) for 45 minutes for repulping washing, and then filtered to recover the polyethylene glycol derivative. This operation was repeated 6 times, and a total of 7 times of repulping washing was performed (step (B)).

Next, to the obtained polyethylene glycol derivative, 222 g of ethyl acetate was added to dissolve at 40°C, and then 92.5 g of hexane was added to cause reprecipitation. After stirring at 15°C for 15 minutes, the mixture was filtered to recover the polyethylene glycol derivative (step (C)). The obtained polyethylene glycol derivative was washed with 148 g of hexane and then dried in vacuum to obtain a target substance.

Results of Comparative Example 5 showed that when Y × T in the repulping washing is below a lower limit, impurity removal efficiency decreases.

[Table 4]

| | Y | T | Y × T | Contents (ppm) of impurities | |
|---|---|---|---|---|---|
| | | | | β-Ala-diNHS | DCU |
| Example 1 | 0.7 | 15 | 10.5 | 8 | 13 |
| Comparative Example 5 | 0.1 | 1 | 0.1 | 851 | 2437 |

The results of Comparative Examples 4 and 5 show that an appropriate Y × T range is necessary for repulping washing.

[Table 5]

| | Y × T value | Results |
|---|---|---|
| Comparative Example 4 | 0.1 | Reduction in removal efficiency of impurities |

(continued)

| | Y × T value | Results |
|---|---|---|
| Example 1 | 10.5 | Good removal of impurities<br>No loss of target substance |
| Comparative Example 5 | 31.5 | 12% loss of target substance |

INDUSTRIAL APPLICABILITY

According to the present invention, a polyethylene glycol derivative, which is a pharmaceutical raw material or a pharmaceutical additive, can be obtained with high efficiency, high purity, and uniform quality.

Although the present invention has been described in detail and with reference to specific embodiments, it will be apparent to those skilled in the art that various changes and modifications can be made without departing from the spirit and scope of the present invention.

The present application is based on a Japanese patent application (Japanese Patent Application No. 2022-42041) filed on March 17, 2022, the contents which are incorporated herein by reference.

## Claims

1. **A method** for producing a polyethylene glycol derivative, the method comprising:

   (A) a step of preparing a crude polyethylene glycol derivative containing a polyethylene glycol derivative having at least one selected from the group consisting of a functional group capable of reacting with a bio-related substance, a functional group serving as a precursor of the functional group, and a protective group for the functional group at a terminal thereof, and impurities;
   (B) a step of mixing the crude polyethylene glycol derivative with a mixed organic solvent made from an organic solvent A and an organic solvent B to form a slurry, repulping washing the slurry, and then recovering the polyethylene glycol derivative from the mixed organic solvent; and
   (C) a step of dissolving the polyethylene glycol derivative obtained in the step (B) in a good solvent and then recovering the polyethylene glycol derivative from the good solvent, wherein

   the organic solvent A is selected from the group consisting of xylene, toluene, benzene, methyl acetate, ethyl acetate, butyl acetate, acetonitrile, acetone, N,N-dimethylformamide (DMF), dimethyl sulfoxide (DMSO), chloroform, dichloromethane, and combinations thereof,
   the organic solvent B is selected from the group consisting of pentane, hexane, heptane, diethyl ether, methyl tert-butyl ether (MTBE), and combinations thereof, and
   assuming that a mass ratio of the organic solvent A to a total value of a mass of the organic solvent A and a mass of the organic solvent B (mass of organic solvent A/(mass of organic solvent A + mass of organic solvent B)) is Y, and a temperature during the repulping washing is T (°C), Y and T satisfy the following relation:

   $$0.5 \leq Y \times T \leq 30.$$

2. The method for producing a polyethylene glycol derivative according to claim 1, wherein the step (B) is repeated a plurality of times.

3. The method for producing a polyethylene glycol derivative according to claim 1 or 2, wherein the organic solvent A is ethyl acetate or a mixed solvent of ethyl acetate and acetonitrile, and the organic solvent B is hexane.

4. The method for producing a polyethylene glycol derivative according to any one of claims 1 to 3, wherein the mass of the organic solvent A and the mass of the organic solvent B are each 1 to 50 times a mass of the polyethylene glycol derivative, and the temperature during the repulping washing is 1°C to 33°C.

**INTERNATIONAL SEARCH REPORT**

International application No. **PCT/JP2023/009771**

**A. CLASSIFICATION OF SUBJECT MATTER**

***C08G 65/30***(2006.01)i
FI: C08G65/30

According to International Patent Classification (IPC) or to both national classification and IPC

**B. FIELDS SEARCHED**

Minimum documentation searched (classification system followed by classification symbols)

C08G65/00-65/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 03/000771 A1 (NIPPON KAYAKU KABUSHIKI KAISHA) 03 January 2003 (2003-01-03)<br>claims, column of examples, in particular, production example 6 | 1-4 |
| X | JP 2004-10479 A (JAPAN SCIENCE AND TECHNOLOGY CORP.) 15 January 2004 (2004-01-15)<br>claims, column of examples, in particular, paragraph [0056] | 1-4 |
| A | JP 2014-208786 A (NOF CORP.) 06 November 2014 (2014-11-06) | 1-4 |
| A | JP 2013-227543 A (NOF CORP.) 07 November 2013 (2013-11-07) | 1-4 |
| A | WO 2010/013836 A1 (NANOCARRIER CO., LTD.) 04 February 2010 (2010-02-04) | 1-4 |
| A | WO 2020/218390 A1 (TOKYO INSTITUTE OF TECHNOLOGY) 29 October 2020 (2020-10-29) | 1-4 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/009771**

| Patent document cited in search report | Publication date (day/month/year) | Patent family member(s) | Publication date (day/month/year) |
|---|---|---|---|
| WO 03/000771 A1 | 03 January 2003 | US 2004/0151690 A1<br>claims, column of examples in particular, production example 6<br>EP 1408066 A1 | |
| JP 2004-10479 A | 15 January 2004 | US 2005/0119193 A1<br>claims, column of examples, for example, paragraph [0087]<br>WO 2003/101465 A1<br>EP 1510215 A1 | |
| JP 2014-208786 A | 06 November 2014 | US 2016/0046762 A1<br>WO 2014/157117 A1<br>EP 2980115 A1 | |
| JP 2013-227543 A | 07 November 2013 | US 2015/0073155 A1<br>WO 2013/147015 A1<br>EP 2832765 A1 | |
| WO 2010/013836 A1 | 04 February 2010 | US 2010/0221320 A1<br>EP 2281576 A1 | |
| WO 2020/218390 A1 | 29 October 2020 | US 2022/0211646 A1<br>EP 3960242 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004197077 A
- JP 2022042041 A


### Non-patent literature cited in the description


- **HARRIS, J. M.** Poly(Ethylene Glycol) Chemistry. Plenum Press, 1992
- **PETER G.M. WUTS**. Green's Protective Groups in Organic Synthesis
- **GROSS, HANS** ; **BILK, L.** *Tetrahedron*, 1968, vol. 24 (24), 6935-9